# EUROPEAN PATENT APPLICATION

(11) **EP 4 148 378 A1**
(43) Date of publication of application: **15.03.2023**
(21) Application number: 21196294.9
(22) Date of filing: 13.09.2021
(51) Int. Cl.: G01C 11/00, G01C 15/00, G01C 21/00, G06V 20/17, G01S 17/89

(54) **MINING WORKSITE MAPPING**

(71) Applicant: Sandvik Mining and Construction Oy, 33330 Tampere (FI)
(72) Inventor: PUURA, Jussi, 33311 Tampere (FI)
(74) Representative: Sandvik

(57) **Abstract**

According to an example aspect of the present invention, there is provided a method, comprising: detecting first mapping data, the first mapping data being based on environment scanning by an unmanned aerial vehicle, UAV, associated with a mining vehicle, performing a transformation for the first mapping data to generate second mapping data comprising coordinates of a worksite reference system, and providing the second mapping data for a worksite model comprising third mapping data from another mapping source.

## Description

### FIELD

The present invention relates to mining worksite mapping, and in particular to performing mapping by utilizing an unmanned aerial vehicle associated with a mining vehicle.

### BACKGROUND

Mining or construction excavation worksites, such as hard rock or soft rock mines, may comprise areas for automated operation of mobile vehicles, herein referred to as vehicles. A vehicle may be an unmanned, e.g. remotely controlled from a control room, or a manned vehicle, i.e. operated by an operator in a cabin of the mobile vehicle. An automated vehicle operating in an automatic mode may operate independently without external control but may be taken under external control at certain operation areas or conditions, such as during states of emergencies.

Vehicles may comprise one or more sensors for scanning environment of the vehicle, to detect obstacles and/or tunnel wall surface, for example. Such sensors, such as two- or three-dimensional laser scanners, may be referred to as environment scanning sensors. Position tracking may be arranged particularly in underground mines on the basis of scanning data from the sensor(s) and a predefined environmental model.

Unmanned aerial vehicles (UAVs), such as drones, may be applied to support mining operations. A drone may be applied to scan underground tunnel areas, for example.

### SUMMARY

The invention is defined by the features of the independent claims. Some specific embodiments are defined in the dependent claims.

According to a first aspect, there is provided an apparatus, being configured to or comprising means configured to: detect first mapping data, the first mapping data being based on environment scanning by an unmanned aerial vehicle, UAV, associated with a mining vehicle, perform a transformation for the first mapping data to generate second mapping data comprising coordinates of a worksite reference system, and provide the second mapping data for a worksite model comprising third mapping data from another mapping source. The means may comprise one or more processors and memory comprising instructions, when executed by the one or more processors, cause the apparatus to perform the features.

According to a second aspect, there is provided a method for mining worksite mapping, comprising: detecting first mapping data, the first mapping data being based on environment scanning by an unmanned aerial vehicle, UAV, associated with a mining vehicle, performing a transformation for the first mapping data to generate second mapping data comprising coordinates of a worksite reference system, and providing the second mapping data for a worksite model comprising third mapping data from another mapping source.

According to a third aspect, there is provided an apparatus comprising at least one processor, at least one memory including computer program code, the at least one memory and the computer program code being configured to, with the at least one processor core, cause the apparatus at least to perform the method or an embodiment of the method.

According to a fourth aspect, there is provided a computer program, a computer program product or (a non-tangible) computer-readable medium comprising computer program code for, when executed in a data processing apparatus, to cause the apparatus to perform the method or an embodiment thereof.

### BRIEF DESCRIPTION OF THE DRAWINGS

FIGURE 1 illustrates an example of a vehicle at a worksite comprising an underground tunnel system;
FIGURES 2 to 4a illustrate methods according to at least some embodiments;
FIGURE 4b illustrates transformation between reference frames;
FIGURE 5 illustrates an example control system; and
FIGURE 6 illustrates an example apparatus capable of supporting at least some embodiments.

### EMBODIMENTS

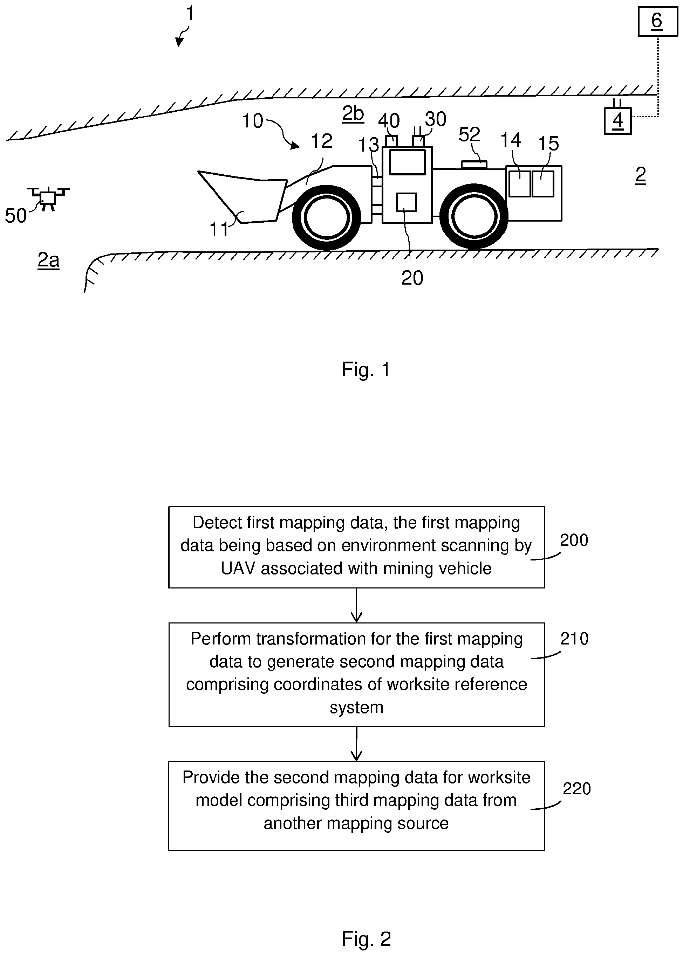

Figure 1 illustrates a simplified example of a portion of mining worksite 1, in the present example comprising an underground (tunnel) portion or tunnel 2. The mining worksite may comprise an ore mine or a construction site, such as a railway or road tunnel site. However, it will be appreciated that a worksite may comprise only on-surface areas, only underground areas, or both surface and underground areas. The term mining vehicle herein refers generally to mobile work machines suitable to be used in the operation of different kinds of underground or surface mining or construction excavation worksites, such as lorries, dozers, dumpers, vans, mobile rock drilling or milling rigs, mobile reinforcement machines, and bucket loaders or other kind of mobile work machines which may be used in different kinds of excavation worksites.

The vehicle is in the present example a loader or a load and haul (LHD) vehicle comprising a bucket 11 connected to a boom 12. The vehicle 10 may be, for example, an articulated vehicle comprising two sections connected by a joint 13. However, it will be appreciated that application of the presently disclosed features are not limited to any particular type of vehicle which may be used at excavation worksites. Some other examples of such vehicle include inspection vehicles, autonomous inspection vehicles (AIVs), lorries, dumpers, vans, mobile rock drilling rigs, or mobile reinforcement machines.

In the example of Figure 1, the vehicle 10 comprises a system 14 of pumps for generating hydraulic pressure for operating various parts of the machine, such as lifting the boom 12, turning the bucket 11, etc. The vehicle 10 may comprise one or more other sources of energy, such as an accumulator, a hydrogen container, a fuel tank, etc. The vehicle 10 may comprise a motor 15, such as a combustion engine or an electric motor. Power from the motor 15 may be provided by a crank shaft to front and/or rear wheels either directly or via a gear box.

The vehicle 10 comprises at least one control unit 20 configured to control at least some functions and/or actuators of the vehicle. The control unit 20 may comprise one or more computing units/processors executing computer program code stored in memory. The control unit may be connected to one or more other control units of a control system of the vehicle, in some embodiments by a controller area network (CAN) bus. The control unit may comprise or be connected to a user interface with a display device as well as operator input interface for receiving operator commands and information to the control unit.

The control unit 20 may be configured to control autonomous operation control and utility control, such as UAV control. The mining vehicle 10, in some embodiments the control unit 20, may be configured to perform the method of Figure 2, or an embodiment thereof. There may be one or more other control units in the vehicle for controlling other operations. It is to be appreciated that the control unit 20 may be configured to perform at least some of the below illustrated features, or a plurality of control units or controllers may be applied to perform these features. There may be further operations modules or functions performed by the control unit(s), e.g. an automatic mapping function, at least one positioning function, a navigation or autonomous driving function, and/or UAV control function. It is to be appreciated that at least some of the control functionality could be implemented even outside the vehicle, e.g. at a worksite management system.

The vehicle 10 may comprise a wireless communication device 30, by which the control unit 20 and/or another unit of control system of the vehicle 10 may be configured to establish a data transmission connection to at least one control device of a (mining operations) control system 6 external to the vehicle by utilising a wireless connection provided by a base station or access node 4. The communication device 30 may thus be operatively connected to a communications system of the worksite, such as a wireless access system comprising a wireless local area network (WLAN) and/or a cellular communications network (e.g. a 4G, 5G or another generation cellular network).

The system 6 may comprise or be connected to further network(s) and/or data processing system(s), such as a worksite management system, a cloud service, a data analytics system, an intermediate communications network, such as the internet, etc. The system may comprise or be connected to further device(s) or control unit(s), such as a handheld user unit, a vehicle unit, a worksite management device/system, a remote control and/or monitoring device, data analytics device, sensor system/device, etc.

The vehicle 10 may be unmanned. Thus, the user interface may be remote from the vehicle and the vehicle may be remotely controlled by an operator in the tunnel, or in a control room at the worksite, or even long distance away from the worksite via communications network(s). The vehicle 10 may be an automated vehicle, which in an autonomous operating or driving mode may operate/drive independently without requiring continuous user control but which may be taken under external control during states of emergencies, for example. When the vehicle is in a manual driving mode, an operator drives the vehicle manually, by remote control or locally at the vehicle by operator controls. The operator may set the vehicle into a (default) automatic driving mode in which the vehicle drives automatically a specified route, e.g. between a loading point and a dump shaft. Below disclosed features may be applied when the vehicle 10 operates in the automatic driving mode, when the vehicle is in the manual operating mode, and/or for manually operated vehicles.

The vehicle 10 may comprise a positioning device or unit, such as a satellite (based) positioning unit for surface satellite-based positioning, which may also be referred to as Global Navigation Satellite System (GNSS) device.

The mining vehicle 10 comprises one or more scanning units, or scanners 40, configured to perform scanning of environment around the vehicle. For example, the vehicle 10 may comprise a front scanner configured to scan environment towards a normal forward driving direction (and naturally to sides within reach of the scanner). The vehicle may also comprise a rear scanner configured to scan the environment towards a direction backwards of the vehicle.

In some embodiments, the scanning results are applied to detect position and orientation of the vehicle and one or more further elements thereof, such as the position and orientation of the scanner 40, a landing pad 52, or the bucket 11. The control unit 20, or alternatively another control/computation unit in the vehicle, may be configured to compare operational scanned tunnel profile data to reference profile data stored in an environment model, which may also be referred to as worksite model or map. The control unit 20 may be configured to position the vehicle on the basis of finding a match in the environment model. Scanner-based positioning may be applied in underground worksites or other areas where satellite-based positioning is unavailable.

In an embodiment, the scanner 40 may be a 2D scanner configured to monitor tunnel walls at desired height, for example. In another embodiment, the scanner 40 is a 3D scanner, in which case 3D scanning data or point cloud data is produced and applied for positioning the vehicle. Point cloud data generated on the basis of scanning may be applied for generating and updating the worksite map. The vehicle 10 may comprise a simultaneous localization and mapping (SLAM) unit configured to both position the vehicle and (augment) map the environment on the basis of (2D or 3D) scanning information while the vehicle is driving.

A control unit, e.g. the control unit 20, may be configured to execute a point cloud matching functionality for matching operational (scanned by the scanner(s) 40) point cloud data to environment model point cloud data, such as reference point cloud data. Position and orientation of the scanning device and/or another interest point of the vehicle, such as the (leading edge of the) bucket 11, may be determined in worksite coordinate system on the basis of the detected matches between the operational point cloud data and the reference cloud data. The scanner may be a laser scanner or a 3D or 4D radar, but it is to be appreciated that other scanner configurations and sensor types, appropriate for vehicles at underground worksite conditions may be applied instead of or in addition to laser sensors or radars.

A driving plan, or a route plan, may define a route to be driven by the vehicle 10 and may be used as an input for automatic driving control of the vehicle. The plan may be generated offline and off-site, for example in an office, or on-board the vehicle e.g. by a teaching drive. The plan may define a start point, an end point, and a set of route points for the automatic drive. Such plan may be sent via a wired or wireless connection to, or otherwise loaded to the vehicle, to a memory of the vehicle for access by the control unit 20 or another unit of the vehicle controlling navigation of the vehicle along the route. In another embodiment, route points are not pre-defined, but the mine vehicle defines path and steering control to avoid obstacles during autonomous driving towards a destination point.

A UAV 50 may be associated with the mining vehicle 10. The association of the UAV with the mining vehicle may refer to the UAV being at least known by the mining vehicle. Association of an apparatus (e.g. the UAV 50) with a counterpart apparatus (e.g. the mining vehicle 10) may comprise at least one of the following relationships: the apparatus is on the same network as the counterpart, the apparatus and the counterpart are in physical proximity, at least one of the apparatus and counterpart are assigned to the other, the apparatus is on the same worksite as the counterpart. The mining vehicle may provide a platform for the UAV and instruct the UAV. The UAV may be specific to a particular mining vehicle, or part of its configuration, or the UAV may connect and support multiple mining vehicles.

The UAV 50 may comprise a sensor assembly, which may provide a monitoring capability so as to allow the UAV to capture data from the environment surrounding the UAV (and the vehicle 10) and send the captured data back to the vehicle. This may enable the UAV to provide the vehicle with information about surrounding environment of the UAV in substantially real-time during flying of the UAV. The UAV 50 may be provided with an image sensing capability so as to send real-time image data to the vehicle. The UAV may comprise a scanner, in some embodiments a 3D scanner, e.g. a light detection and ranging, LIDAR scanner, to perform environment scanning and generate environment sensing data, to explore a worksite portion. The sensing data may comprise or be further processed to generate mapping data. The UAV may comprise a SLAM unit configured to both position the UAV and map the environment on the basis of (2D or 3D) scanning information while flying.

The mining vehicle 10 may comprise a landing platform or pad 52, which may also be referred to as a docking station, for the UAV 50. The landing pad 52 may comprise docking element(s) enabling landing of the UAV and securing the UAV when onboard and travelling with the mining vehicle. The landing pad may also comprise a charger unit to supply a charge supply connector of the UAV 50.

The landing pad 52 may comprise an antenna and/or transceiver (not shown) for enabling transmission and reception of wireless signals. Alternatively, the antenna may be provided in another position of the vehicle 10.

The landing pad 52 may be operatively connected to the mining vehicle 10 via wired or wireless connection, e.g. via wired ethernet or WLAN. The landing pad may communicate to the UAV with its own built-for-purpose radio system. The landing pad may be configured to relay the data of the UAV to the vehicle and mine. In another embodiment, the mining vehicle is configured to concurrently communicate directly with the landing pad 52 and the UAV 50 with separate connections. In another embodiment, the mining vehicle is configured to communicate directly with the UAV, and may further be configured to communicate also the state of the landing pad.

A high bandwidth connectivity by a wireless communication device of the mining vehicle 10 to the worksite system may be utilized to provide wireless connectivity for the landing pad 52 and/or the UAV 50. For example, 3GPP 5G new radio (NR) sidelink or WLAN based communication may be applied. The mining vehicle can expose one or more communication interfaces of the vehicle for the UAV and/or landing pad to send and receive information).. For example, such information may include one or more of location of the vehicle or the landing pad, vehicle state, positioning assistance, commands, map data.

Exploration or survey of a worksite volume, such as an underground tunnel portion, may include a portion 2a, e.g. a shaft or narrow/low portion, unreachable to scan by the mining vehicle 10. Thus, the UAV 50 may be instructed to perform an exploration or mapping task, to scan such portion to map the portion. However, when a satellite based positioning system is not available, e.g. at underground tunnels, the UAV may position themselves in relation to its (aerial mission) starting point, in the present example the landing pad 52. It should be possible to, for example, for an operator at a remote control room to know the status of the UAV and the mining vehicle, in order to monitor or control their operations.

There are now provided further improvements for improving mapping of a worksite portion by utilizing an UAV associated with a mining vehicle, as further illustrated below.

Figure 2 illustrates a method for worksite mapping according to some embodiments. An apparatus processing worksite mapping data, such as the vehicle 10, and further the control unit 20 thereof, may be configured to perform the method.

The method may comprise detecting 200 first mapping data, the first mapping data being based on environment scanning by a UAV associated with a mining vehicle.

Block 210 comprises performing a transformation for the first mapping data to generate second mapping data comprising coordinates of a worksite reference system.

Block 220 comprises providing the second mapping data for a worksite model comprising third mapping data from another mapping source.

The worksite model may generally refer to a worksite map or an environment model, indicative of positional data in coordinate values of or in relation to the worksite reference system, in some embodiments in global coordinates. The worksite reference system may refer to a reference system applied at least locally at the worksite for the worksite model, in some embodiments the global coordinate system. The worksite reference system may be the same coordinate system in which the worksite plan (such as mine plan) is given. The reference system may also comprise metadata, such as timestamps, relating to the positional data. Mapping data may refer generally to data representative of or modelling worksite portion profile, such as an underground tunnel profile represented by point cloud data.

The transformation in block 210 may comprise converting positional data, such as coordinate values, in relation to local reference system of the UAV or the mining vehicle, into the worksite reference system. Thus, the first mapping data may be generated by the UAV without knowing its position in the worksite reference system or the worksite model. The third mapping data may be existing data of, or in proximity to, the volume or area being modelled by the first (and second) mapping data. The third mapping data may comprise earlier performed survey results and/or a worksite plan data, such as tunnel design or plan data. The third mapping data may be generated by one or more devices configured to generate mapping data of the worksite, such as the mining vehicle 10, another mining vehicle, another UAV, a handheld mapping unit, or another type of device, such as a computing unit with modelling software configured for environment model generation and modification.

Block 220 may comprise, or may be followed by a further block comprising adding the second mapping data to the worksite model, or merging the second mapping data with the third mapping data to be added to the worksite map. Addition of the second mapping data may include storing the second mapping data, or at least a portion thereof, as part of the worksite model or map, to complement the model with volumes or areas now mapped by the UAV 50. It will be appreciated that further processing actions may be performed on the second mapping data when it is being included into the worksite map.

In some embodiments, the first mapping data comprises point cloud data and block 210 comprises including or representing position data in the received point cloud data in 3D coordinates of the worksite reference system. Position data of the point cloud data points may thus be converted into coordinates of the worksite reference system. After coordinate values in the worksite reference system are defined, the point cloud data as the second mapping data may be added into the worksite model to complement existing point cloud data (such as the third mapping data). Thus, new points defined in the second mapping data are added. In case there are overlapping points, earlier defined points may be replaced by newly defined points, or the earlier point data is maintained.

The apparatus performing the method, or an embodiment thereof, may be, or be included in:
a) the UAV configured to generate the first mapping data and transmit the at least the second mapping data to the mining vehicle to a control device of a mining operations control system 6, such as a worksite server or a cloud server,
b) the mining vehicle configured to receive the first mapping data from the UAV in block 200, or
c) a control device of a mining operations control system 6, such as a worksite server or a cloud server, configured to receive the first mapping data from the UAV or the mining vehicle in block 200. The control device may further be configured to generate a graphical user interface (GUI) view illustrating a portion of the worksite model updated with the third mapping data.

In case of a), a control unit or function of the UAV may be configured to receive in block 200 the first mapping data from a scanner or a memory of the UAV, for example. In options a) and b), block 220 may comprise transmitting, from the UAV 20 or the mining vehicle 10, to a mining operations control system 6 or device thereof, a worksite model update message including at least the second mapping data.

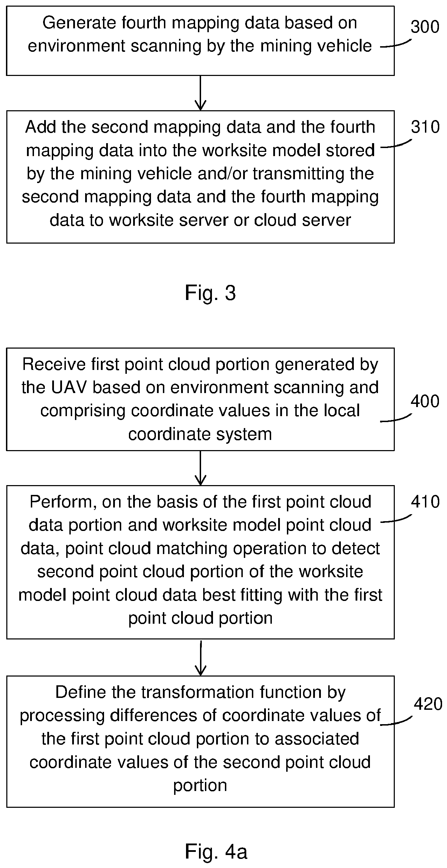

In some embodiments, the apparatus is or is included in the mining vehicle 10. With reference to Figure 3, the mining vehicle may be configured to map its environment 2b by the scanner 40 and generate 300 fourth mapping data based on environment scanning, such as point cloud data from the scanner 40. When merging or combining mapping data from multiple sources, mapping data or result from the vehicle may be used to link or bind the first mapping data by the UAV to existing survey results in coordinates of the worksite reference system. For example, the UAV 50 may be instructed to explore the portion 2a, unreachable to scan by the mining vehicle 10, and provide the first mapping data in response to such exploration task. The mining vehicle may be initially instructed to explore the tunnel 2, and the mining vehicle may be configured to assign the portion 2a for the UAV to explore and remaining area 2b for itself to explore. However, it is to be appreciated that such task allocation may instead be performed by another unit, such as the worksite or cloud server.

The mining vehicle 50 may be configured to add 310 the second mapping data and the fourth mapping data into the worksite model stored by the mining vehicle. Alternatively or additionally, the mining vehicle 50 may be configured to transmit the second mapping data and the fourth mapping data to a control device of the mining operations control system 6, such as a worksite server or a cloud server.

Some further example embodiments are illustrated below, some of which are applicable to all options a) to c), or only to one or some of the options a) to c).

The apparatus performing the method may be configured to perform the transformation in block 210 by a transformation function. The transformation function is applied to convert coordinate values of a local coordinate system of the UAV and/or mining vehicle to global coordinate values of the worksite reference system.

The apparatus performing the method may be configured to perform further block(s) preceding block 200, comprising generating or receiving a transformation function for coordinate conversion from a local coordinate system of the UAV and/or mining vehicle to the worksite reference system. The transformation function may be pre-determined and stored in a memory of the control unit, for example.

In some embodiments, the apparatus performing the method is configured to generate the transformation function, e.g. by the control unit 20 of the mining vehicle onsite. The transformation function may be computed on the basis of (initial) training data, which may comprise (initial) scanning results from the UAV 50 and already existing mapping results of the area around the vehicle and/or the UAV. The transformation of block 210 may be performed by using the transformation function to convert coordinate values of the first mapping data in the local coordinate system to the coordinate values of the worksite reference system.

With reference to Figure 4a, in case of point cloud data, the apparatus performing the method may be configured to generate the transformation function by a method comprising:
- receiving 400 a first point cloud data portion, generated by the UAV based on environment scanning and comprising coordinate values in the local coordinate system,
- performing 410, on the basis of the first point cloud data portion and worksite model point cloud data, point cloud matching operation to detect a second point cloud data portion of the worksite model point cloud data best fitting with the first point cloud data portion, and
- defining 420 the transformation function by processing differences of coordinate values of the first point cloud data portion to associated coordinate values of the second point cloud data portion.

Thus, to generate the transformation function, the apparatus may be configured to control the UAV 50 to scan a known environment portion of the worksite modelled in the worksite model point cloud data, e.g. when onboard the mining vehicle. A point cloud pattern search algorithm may be performed in block 410 to identify patterns and find matching patterns in the first point cloud data portion and worksite model point cloud data. Performing the matching may comprise aligning or fitting model portions represented by the point cloud data portions, in order to identify best matching portions representing the same surface area, e.g. tunnel walls and roof around the mining vehicle. An algorithm performing the point cloud matching operation may be configured with rule(s) defining required/minimum matching ratio in order to identify candidate point cloud portions to be matching.

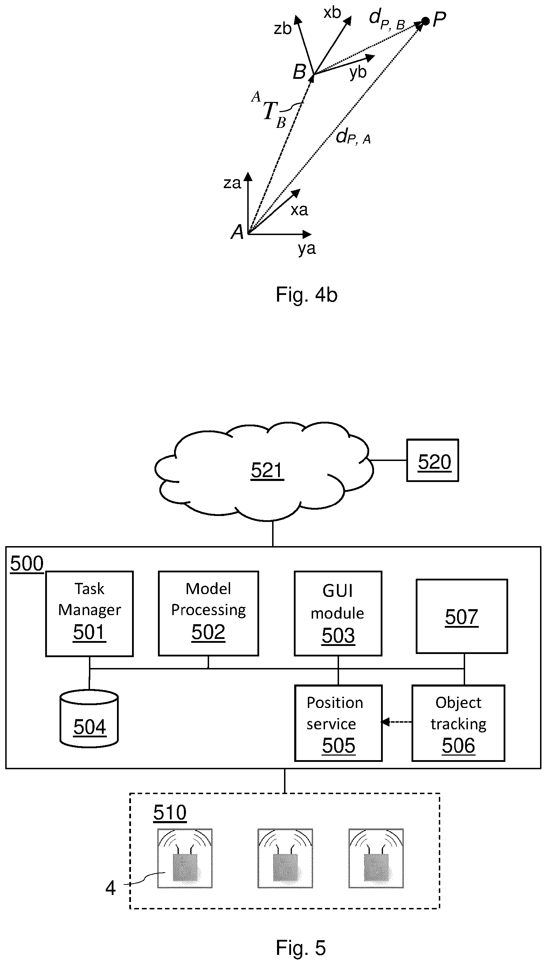

There are different methods to transform points measured in one coordinate frame to presentation in another coordinate system. The apparatus performing the method may be configured to apply at least some of the below indicated features to perform the transformation. For example, with reference to Figure 4b, points measured in a reference frame of the UAV (and/or mining vehicle) *A* may be transformed into a reference frame *B* of the worksite by utilizing a transformation matrix or or quaternions.

A pose has a translational component and a rotational component. In 3D world a pose can be represented by a:
1) a translation vector and a set of Euler angles,
2) a translation vector and a unit-Quaternion,
3) a translation vector and a set of roll-pitch-yaw angles, or
4) a 4x4 homogeneous transformation matrix.

To represent a pose one needs to be able to represent a translation (position) and an orientation. The first three are suitable since they use a vector to represent position and various known approaches to representing orientation. The last is also suitable since the matrix embeds a translation vector and a rotation matrix.

When transformation from *A* to *B, ^{A}T_{B}*, is known, point P in the UAV's, or mine vehicle's, local reference system, or coordinate frame A can be transformed or presented in the worksite reference system or frame *B. d_{P},_{A}* refers to distance of *A* to *P* and *d_{P},_{B}* refers to distance of *B* to P. The transformation may be conducted for every point in the point cloud data produced by the UAV or the mine vehicle.

The apparatus, such as the mining vehicle 10 or the UAV 50, may be configured to perform the transformation on the spot when the first mapping data is received and matching is possible. After that, the UAV or the vehicle can transform incoming new point cloud data to the mine reference frame or the mine vehicle reference frame on the fly in real time. This enables, for example to draw mine data, mining vehicle data and UAV data seamlessly in the same reference system.

If the apparatus performing the method, such as the vehicle 10, finds out the transformation *^{A}T_{B}* with initial first mapping data from the UAV, the apparatus may be configured to also calculate the inverse of the transformation inv (*^{A}T_{B}*) *=* (*^{B}T_{A}*) and provide worksite positional data or missions to the UAV in the reference frame of the UAV. This way the UAV does not need to be equipped with capability to work in the worksite reference system or frame.

In an example embodiment, the first mapping data indicates movement of the UAV in relation to a source position of the UAV. For example, the starting point at the landing pad 52 may be a zero point and the UAV measures 3D movement in the x, y, z directions and stores the scanning data in relation to distance from the starting point. The transformation may comprise defining location of the source position in the worksite reference system and defining, in the second mapping data, coordinates in relation to the worksite reference system based on the indicated movement.

The first mining data may be defined in relation to the position of (a portion of) the mining vehicle 10 at the starting time of the UAV aerial mission (to perform an exploration task). As illustrated earlier, the mining vehicle may be configured to define the position based on matching operational scanning data by the scanner 40 to reference profile data in the worksite model, for example. The vehicle and/or the UAV 50 may be configured to store the respective starting position of the UAV on the basis of the position of the mining vehicle, e.g. by storing the position of the landing pad 52 at the starting time, in coordinates of the worksite reference system. Thus, regardless of the potential movement of the vehicle during the ongoing exploration task of the UAV, the coordinates for the second mapping data in the worksite reference system may be appropriately defined in block 210 based on the position data in relation to the stored starting position.

In an example, a UAV is configured to send its relative position continuously to the landing pad 52 or the mining vehicle 50 (may also be referred to as rover). The UAV may be configured to transmit its mapping results (as the first mapping data) in relation to the starting position. The UAV may be configured to stream the mapping results in real time during the mapping to an interface of the mining machine 10 for receiving mapping data and providing the mapping data for further processing. The mining vehicle may be configured to receive a stream of mapping point cloud points from the UAV.

The mining vehicle 10 may be configured to determine or receive information on the mining vehicle's and the landing pad's 52 real time location in the worksite reference system. The mining vehicle may be configured to transform the points received from the UAV into worksite reference system coordinates, and add the points in the worksite map. Alternatively, or additionally, the mining vehicle may be configured to stream the point cloud data originating from the UAV to a worksite server, in addition to its own mapping results. The server may be configured to add the received mapping results into the worksite model and generate (e.g. a 3D) GUI illustrating the continuously complemented worksite model. An operator, e.g. in a remote control room, may thus be provided with a view showing the model to grow in real-time. The GUI may thus visualize real-time progress and status of worksite exploration performed by the mining vehicle and/or the UAV, and possibly also other mapping devices at the worksite.

For monitoring position of the UAV 50, the mining vehicle 10 may be configured to receive the UAV's real-time location (which may be relative to the starting point) from the UAV and transform it into the worksite reference system coordinates. The mining vehicle may be configured to send the UAV's location coordinates to a server of e.g. a control room continuously.

The mining vehicle may be configured to send its own location to the server continuously. The server may be configured to generate (e.g. 3D) model of the mining vehicle and a model of the UAV in real time in relation to the 3D model of the mine. The UAV flight in relation to the vehicle and the worksite (as well as other monitored objects at the worksite) may thus be visualized in a real time 3D GUI view.

The UAV may be configured to generate also further position specific data for which coordinates in the worksite reference system are defined. Some examples of such further data include at least some of still image data, video data, (other) sensor data, flight plan or history data.

For example, the apparatus performing the method of Figure 2 may be configured to perform a further method comprising: receiving image data generated by the UAV and associated with local coordinate values of the local reference system of the UAV, converting the local coordinate values into to global coordinate values of the worksite reference system, and associating the global coordinate values with the received image data.

In another example, the UAV is configured to report its flight plan to the mining vehicle or to a server. The flight plan positional data in local reference system may be transformed. The flight plan in the worksite reference system may be included in a GUI view visualizing the worksite or worksite portion. Thus, a remote operator can see also where the UAV is planning to go.

It is to be appreciated that various further features may be complement or differentiate at least some of the above-illustrated embodiments. For example, there may be further user interaction and/or automation functionality further facilitating the operator to monitor the vehicle, select appropriate action to overcome an issue regarding lacking accurate position information, and control the vehicle.

Figure 5 illustrates operational modules of a worksite operations control apparatus or system, such as the system 6, by which some of the present embodiments may be applied. A (worksite) server 500 may be connected to a set 510 of base stations 4 at the worksite to communicate with mining operations devices, such as the mining vehicle 10 and/or the UAV 50.

The server 500 may comprise a task manager or management module 501, which is configured to manage at least some operations at the worksite. For example, the task manager may be configured to assign tasks, such as mining tasks (which may comprise an exploration task) for a fleet of vehicles 10 and update, send control signals to the vehicles, and/or monitor vehicle task performance and status, which may be indicated in a task management GUI.

The server 500 may comprise a model processing module 502, which may be configured to maintain one or more models of the worksite, such as the worksite map. In some embodiments, the model processing module 502 is configured to perform the method of Figure 2, receive the first mapping data from the mining vehicle 10 or the UAV 50, and update the worksite model based on the second mapping data. The worksite model may be stored e.g. in a database or storage unit 504.

The server 500 may comprise a GUI module 503, which is configured to generate at least some display views for an operator (locally and/or remotely). In some embodiments, the GUI module is configured to generate, on the basis of the updated worksite map, a GUI view indicative of 2D or 3D model of the worksite, which also comprise current position(s) of mobile objects at the worksite, such as the vehicle(s) 10 and/or UAV(s) 50.

An object tracking module 506 may be configured to track location of mobile objects and to provide 3D position indicator to further modules, in some embodiments a position service module 505. The position service module 505 may be configured to provide, upon request or by push transmission, mobile object position information obtained from or generated on the basis of information from the object tracking 506 for relevant other modules or functions, such as the database 504, the GUI module 503, and/or remote units or systems 520.

The server 500 may comprise further module(s) 507, such as a remote monitoring process and UI, an event processing module configured to process mine operations data, and/or a cloud dispatcher component configured to provide selected worksite information, such as vehicle monitoring information to a cloud service.

The system and server 500 may be connected to a further system 520 and/or network 521, such a worksite management system device, a cloud service, an intermediate communications network, such as the internet, etc. The system 520 may further comprise or be connected to a further device or control unit, such as a handheld user unit, a vehicle unit, a worksite management device/system, a cloud server, a remote control and/or monitoring device/system, data analytics device/system, sensor system/device, etc.

It is to be appreciated that Figure 5 illustrates only one example and various modifications may be applied. For example, some of the modules of the server 500 may be performed by separate devices. The object tracking 506 may be implemented as part of another module, such as the position service module 505. Further, the modules are illustrated as inter-connected, but it is to be appreciated that not all modules need to be connectable.

The system and the server 500 may be connected to the control unit 20 of a mining vehicle or another mining operations device, such as the UAV 50, for which e.g. control commands may be transmitted. In an example embodiment, the control unit may be provided in each autonomously operating vehicle and be configured to control at least some autonomous operations of the vehicle on the basis of the received control commands.

An electronic device comprising electronic circuitries may be an apparatus for realizing and configured to at least some embodiments illustrated above, such as the method illustrated in connection with Figure 2. The apparatus may be comprised in at least one computing device connected to or integrated into a control system of the vehicle, the UAV, or a device of the mining operations control system 6, e.g. the server 500. In case of a control system of a mining vehicle, such control system may be an intelligent on-board control system controlling operation of various sub-systems of the vehicle, such as a hydraulic system, a motor, etc. Such control systems are often distributed and include many independent modules connected by a bus system of controller area network (CAN) nodes, for example.

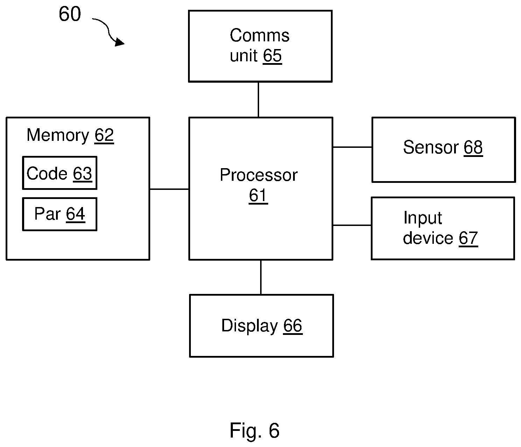

Figure 6 illustrates a simplified example apparatus capable of supporting at least some embodiments of the present invention. Illustrated is a device 60, which may be configured to carry out at least some of the above-illustrated embodiments relating to mapping data processing. In some embodiments, the device 60 comprises or implements e.g. the control unit 20, or other module(s), functions and/or unit(s) for performing at least some of the above-illustrated embodiments. The device may be configured to perform the method of Figure 2 and embodiments thereof.

Comprised in the device 60 is a processor 61, which may comprise, for example, a single- or multi-core processor. The processor 61 may comprise more than one processor. The processor may comprise at least one application-specific integrated circuit, ASIC. The processor may comprise at least one field-programmable gate array, FPGA. The processor may be configured, at least in part by computer instructions, to perform actions.

The device 60 may comprise memory 62. The memory may comprise random-access memory and/or permanent memory. The memory may be at least in part accessible to the processor 61. The memory may be at least in part comprised in the processor 61. The memory may be at least in part external to the device 60 but accessible to the device. The memory 62 may be means for storing information, such as parameters 64 affecting operations of the device. The parameter information in particular may comprise parameter information affecting the mapping data processing related features, such as threshold values.

The memory 62 may be a non-transitory computer readable medium comprising computer program code 63 including computer instructions that the processor 61 is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The processor may, together with the memory and computer program code, form means for performing at least some of the above-illustrated features in the device, such as the method of Figure 2 or embodiments thereof.

The device 60 may comprise a communications unit 65 comprising a transmitter and/or a receiver. The transmitter and the receiver may be configured to transmit and receive, respectively, i.a. data and control commands within or outside the vehicle. The transmitter and/or receiver may be configured to operate in accordance with long term evolution, LTE, 3GPP new radio access technology (N-RAT), wireless local area network, WLAN, a non-terrestrial communication standard, and/or Ethernet standards, for example. The device 60 may comprise a near-field communication, NFC, transceiver. The NFC transceiver may support at least one NFC technology, such as NFC, Bluetooth, or similar technologies.

The device 60 may comprise or be connected to a UI. The UI may comprise at least one of a display 66, a speaker, an input device 67 such as a keyboard, a joystick, a touchscreen, and/or a microphone. The UI may be configured to display views on the basis of above illustrated embodiments. A user may operate the device and control at least some of above illustrated features. In some embodiments, the user may control the vehicle 10 via the UI, for example to manually drive the vehicle, operate a boom, change driving mode, change display views, modify parameters 64, etc.

The device 60 may further comprise and/or be connected to further units, devices and systems, such as one or more sensor devices 68, such as the scanner(s) 40 or other sensor devices sensing environment of the device 60 or properties of the vehicle, such wheel rotation or orientation changes.

The processor 61, the memory 62, the communications unit 65 and the UI may be interconnected by electrical leads internal to the device 60 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

The apparatus, such as the device 60, which may comprise or implement the control unit 20, may be configured to: detect first mapping data, the first mapping data being based on environment scanning by an unmanned aerial vehicle, UAV, associated with a mining vehicle, perform a transformation for the first mapping data to generate second mapping data comprising coordinates of a worksite reference system, and provide the second mapping data for a worksite model comprising third mapping data from another mapping source.

The apparatus may be configured to transmit, to a mining operations control system or device, a worksite model update message including at least the second mapping data.

The apparatus may be configured to add the second mapping data to the worksite model or merge the second mapping data with the third mapping data to be added to the worksite map.

The apparatus may be configured to generate or receive a transformation function for coordinate conversion from a local coordinate system of the UAV and/or mining vehicle to the worksite reference system, and perform the transformation by using the transformation function to convert coordinate values of the first mapping data in the local coordinate system to the coordinate values of the worksite reference system.

The apparatus may be configured to generate the transformation function by:
- receiving a first point cloud data portion generated by the UAV based on environment scanning, the first point cloud data portion comprising coordinate values in the local coordinate system,
- performing, on the basis of the first point cloud data portion and worksite model point cloud data, point cloud matching operation to detect a second point cloud data portion of the worksite model point cloud data best fitting with the first point cloud data portion, and
- defining the transformation function by processing differences of coordinate values of the first point cloud data portion to associated coordinate values of the second point cloud data portion.

The apparatus may be or be included in:
- the UAV configured to generate the first mapping data and transmit the at least the second mapping data to the mining vehicle, to a worksite server, or to a cloud server,
- the mining vehicle configured to receive the first mapping data from the UAV, or
- a worksite server or a cloud server configured to receive the first mapping data from the UAV or the mining vehicle and configured to generate a graphical user interface view illustrating a portion of the worksite model updated with the third mapping data.

The apparatus may be configured to generate fourth mapping data based on environment scanning by the mining vehicle, and add the second mapping data and the fourth mapping data into the worksite model stored by the mining vehicle and/or transmit the second mapping data and the fourth mapping data to a worksite server or a cloud server.

The apparatus may be configured to receive image data generated by the UAV and associated with local coordinate values of a local reference system of the UAV, convert the local coordinate values into to global coordinate values of the worksite reference system, and associate the global coordinate values with the received image data.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, elements, and/or materials may be presented in a common list for convenience. However, these lists should be construed as though each member of the list is individually identified as a separate and unique member. Furthermore, the described features, items, elements, or characteristics may be combined in any suitable manner in one or more embodiments.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

## Claims

1. An apparatus for mining worksite mapping, comprising at least one processor and at least one memory including computer program code, the at least one memory and the computer program code configured to, with the at least one processor, cause the apparatus at least to:
- detect first mapping data, the first mapping data being based on environment scanning by an unmanned aerial vehicle, UAV, associated with a mining vehicle,
- perform a transformation for the first mapping data to generate second mapping data comprising coordinates of a worksite reference system, and
- provide the second mapping data for a worksite model comprising third mapping data from another mapping source.

2. The apparatus of claim 1, wherein the at least one memory and the computer program code are configured to, with the at least one processor, cause the apparatus to: transmit, to a mining operations control system or device, a worksite model update message including at least the second mapping data.

3. The apparatus of claim 1, wherein the at least one memory and the computer program code are configured to, with the at least one processor, cause the apparatus to: add the second mapping data to the worksite model or merge the second mapping data with the third mapping data to be added to the worksite map.

4. The apparatus of any preceding claim, wherein the at least one memory and the computer program code are configured to, with the at least one processor, cause the apparatus to:
- generate or receive a transformation function for coordinate conversion from a local coordinate system of the UAV and/or mining vehicle to the worksite reference system, and
- perform the transformation by using the transformation function to convert coordinate values of the first mapping data in the local coordinate system to the coordinate values of the worksite reference system.

5. The apparatus of claim 4, wherein the at least one memory and the computer program code are configured to, with the at least one processor, cause the apparatus to generate the transformation function by:
- receiving a first point cloud data portion generated by the UAV based on environment scanning, the first point cloud data portion comprising coordinate values in the local coordinate system,
- performing, on the basis of the first point cloud data portion and worksite model point cloud data, point cloud matching operation to detect a second point cloud data portion of the worksite model point cloud data best fitting with the first point cloud data portion, and
- defining the transformation function by processing differences of coordinate values of the first point cloud data portion to associated coordinate values of the second point cloud data portion.

6. The apparatus of any preceding claim, wherein the first mapping data indicates movement of the UAV in relation to a source position of the UAV, and the transformation comprises defining location of the source position in the worksite reference system and defining, to the second mapping data, coordinates in relation to the worksite reference system based on the indicated movement.

7. The apparatus of any preceding claim, wherein the first mapping data is defined by a simultaneous localization and mapping unit of the UAV.

8. The apparatus of any preceding claim, wherein the apparatus is or is included in
- the UAV configured to generate the first mapping data and transmit the at least the second mapping data to the mining vehicle, to a worksite server, or to a cloud server,
- the mining vehicle configured to receive the first mapping data from the UAV, or
- a worksite server or a cloud server configured to receive the first mapping data from the UAV or the mining vehicle and configured to generate a graphical user interface view illustrating a portion of the worksite model updated with the third mapping data.

9. The apparatus of claim 8, wherein the apparatus is or is included in the mining vehicle and the at least one memory and the computer program code are configured to, with the at least one processor, cause the apparatus to:
- generate fourth mapping data based on environment scanning by the mining vehicle, and
- add the second mapping data and the fourth mapping data into the worksite model stored by the mining vehicle and/or transmit the second mapping data and the fourth mapping data to a worksite server or a cloud server.

10. The apparatus of any preceding claim, wherein the at least one memory and the computer program code are configured to, with the at least one processor, cause the apparatus to: receive image data generated by the UAV and associated with local coordinate values of a local reference system of the UAV, convert the local coordinate values into to global coordinate values of the worksite reference system, and associate the global coordinate values with the received image data.

11. A method for mining worksite mapping, the method comprising:
- detecting first mapping data, the first mapping data being based on environment scanning by an unmanned aerial vehicle, UAV, associated with a mining vehicle,
- performing a transformation for the first mapping data to generate second mapping data comprising coordinates of a worksite reference system, and
- providing the second mapping data for a worksite model comprising third mapping data from another mapping source.

12. The method of claim 11, further comprising:
- transmitting, to a mining operations control system or device, a worksite model update message including at least the second mapping data, or
- adding the second mapping data to the worksite model or merging the second mapping data with the third mapping data to be added to the worksite map.

13. The method of any preceding claim, comprising:
- generating or receiving a transformation function for coordinate conversion from a local coordinate system of the UAV and/or mining vehicle to the worksite reference system, and
- performing the transformation by using the transformation function to convert coordinate values of the first mapping data in the local coordinate system to the coordinate values of the worksite reference system.

14. The method of any preceding claim, wherein the method is performed by a mining vehicle receiving the first mapping data from the UAV, the method further comprising:
- generating fourth mapping data based on environment scanning by the mining vehicle, and
- adding the second mapping data and the fourth mapping data into the worksite model stored by the mining vehicle and/or transmitting the second mapping data and the fourth mapping data to a worksite server or a cloud server.

15. A computer program comprising computer program code for, when executed in a data processing apparatus, to cause the apparatus to perform the method in any preceding claim.
